(19) Europäisches Patentamt

European Patent Office

Office européen des brevets

(11) Publication number: **0 365 009**
**A2**

## (12) EUROPEAN PATENT APPLICATION

(21) Application number: **89119425.0**

(22) Date of filing: **19.10.89**

(51) Int. Cl.⁵: **C09D 7/00 , C09D 201/00 , C09D 183/04 , C04B 41/00**

(30) Priority: **20.10.88 JP 264838/88**

(43) Date of publication of application:
**25.04.90 Bulletin 90/17**

(84) Designated Contracting States:
**BE DE FR GB IT**

(71) Applicant: **TORAY SILICONE COMPANY, LIMITED**
**2-3-16, Muro-machi Nihonbashi**
**Chuo-ku Tokyo 103(JP)**

(72) Inventor: **Shimizu, Koji**
**4-25-14 Aobadi**
**Ichihara Chiba Prefecture(JP)**
Inventor: **Murakami, Ichiro**
**3-26-2 Sakuradai**
**Ichihara Chiba Prefecture(JP)**

(74) Representative: **Spott, Gottfried, Dr. et al**
**Patentanwälte Spott und Puschmann**
**Sendlinger-Tor-Platz 11**
**D-8000 München 2(DE)**

(54) **Coating compositions.**

(57) Curable coating compositions comprising a conventional curable coating material and a cured silicone rubber powder, which has uniformly dispersed therein from about 1 to 20 percent by weight of an epoxy group-containing compound or an amino group-containing compound, are disclosed. When cured, the compositions of the invention provide durable mat surface coatings on buildings, structures and machines, inter alia.

EP 0 365 009 A2

## COATING COMPOSITIONS

### BACKGROUND OF THE INVENTION

The present invention relates to coating compositions. More specifically, the invention relates to coating compositions which form coatings having a mat finish and a soft touch.

Conventionally, compositions which form coatings having mat surfaces have been obtained by adding, inorganic powders such as quartz powder and alumina, or synthetic resin powders, such as polyester resins and polyurethane resins, to curable coating materials. However, such inorganic powders are hard and do not have rubber elasticity. Thus, the coating compositions containing inorganic powders produce coatings lacking a soft touch. On the other hand, the synthetic resin powders are softer than inorganic powders, yet they still do not have rubber elasticity, have poor weather resistance, and gradually lose their softness upon long-term use. Therefore, coatings obtained from coating compositions containing synthetic resin powders lack rubber elasticity and do not provide a soft touch over a long period of time.

Unlike the aforementioned systems, when silicone beads are added to room temperature-curable or heat-curable coating materials, coatings with embossed surfaces are obtained. Such coating materials are suitable for forming release coatings which prevent the adhesion of adhesive papers. However, since these compositions contain silicone rubber beads that are not compatible with, or adhesive to, the resin component of the coating composition, the silicone rubber beads are easily separated from the coating film. While they may be effective as compositions for the release of adhesive papers, they are poor in durability as coating compositions to be used for general applications on buildings, structures and various machines.

As a result of a thorough investigation of ways to overcome such problems, we have discovered that certain silicone rubber particles have good adhesion to curable coating vehicle resins and the above problems can be overcome by adding such particles to coating compositions. Thus, it is an object of the present invention to provide novel coating compositions which form coatings having strong adhesion between the curable coating material and silicone rubber particles, and also exhibit rough mat surfaces and a rubbery soft touch. The present invention therefore concerns a coating composition comprising:

(I) 100 parts by weight of a curable coating material; and

(II) from about 1 to about 150 parts by weight of a cured silicone rubber powder which has uniformly dispersed therein from about 1 to about 20 percent by weight of a compound selected from the group consisting of

(i) an epoxy group-containing compound and

(ii) an amino group-containing compound, said silicone rubber powder having an average particle diameter of less than about 100 mμ.

The curable coating materials (I) used in the present invention are those conventionally used on buildings, structures, various machines, etc.; as long as they are curable, there are no particular restrictions. Such coating materials include room-temperature-curable coating materials, room-temperature-drying coating materials and heat-curable coating materials. Specific examples include polyurethane resin coating materials, alkyd resin coating materials, amino-alkyd resin coating materials from amino resins and alkyd resins, epoxy resin coating materials, acrylic resin coating materials, silicone-modified epoxy resin coating materials, silicone-modified polyester resin coating materials and silicone resin coating materials, and the like. Typically, these curable coating materials are supplied as a solution in an organic solvent and are well known in the art.

The cured silicone rubber powders (II) used in the present invention contain (i) an epoxy group-containing compound or (ii) an amino group-containing compound uniformly dispersed therein.

The epoxy group-containing compounds are epoxy group-containing silicon compounds such as alkoxysilanes, (e.g., γ-glycidoxypropyltrimethoxysilane, γ-glycidoxypropylmethyldimethoxysilane, β-(3,4-epoxycyclohexyl)-trimethoxysilane), and their partial hydrolytic condensates; and organic epoxy compounds such as glycidyl methacrylate, allyl glycidyl ether, vinylcyclohexene monoxide, etc. The amino group-containing compounds are amino group-containing silicon compounds such as amino group-containing organoalkoxysilanes (e.g., γ-aminopropyltrimethoxysilane, γ-aminopropyltriethoxysilane, N-β-(aminoethyl-γ-aminopropyltrimethoxysilane, N-β- (aminoethyl )-γ-aminopropylmethyldimethoxysilane, N,N-dibutylaminotrimethoxysilane), and their partial hydrolytic condensates.

For the purposes of the present invention, the cured silicone rubber powders (II) contain about 1 to about 20 wt% of such epoxy group-containing compounds or amino group-containing compounds.

The silicone rubber compounds constituting the cured silicone rubber powders (II) used in the present invention are addition reaction-curable silicone rubber, organic peroxide-curable silicone rubber or condensation reaction-curable silicone rubber. Typically, for the addition reaction-curable silicone rubber compounds, compositions containing a silicon-bonded alkenyl group-containing diorganopolysiloxane, an organohydrogenpolysiloxane, and a platinum catalyst are cured. For organic peroxide-curable silicone rubber compounds, compositions containing a vinyl group-containing diorganopolysiloxane and an organic peroxide are cured. For condensation reaction-curable silicone rubber compounds, compositions containing a silanol group-containing diorganopolysiloxane and an organohydrogenpolysiloxane (or alkoxysilane) and a curing catalyst are cured. In each of the above systems, a reinforcing filler, such as pyrogenic silica, may be thoroughly dispersed in the silicone rubber before cure. For the purposes of the present invention, it is preferred that the cured silicone rubber powder (II) is prepared from dimethylpolysiloxane polymers containing the aforementioned reactive groups.

The cured silicone rubber powders (II) used in the present invention have an average particle diameter preferably below 100 μm (micrometer) and are added in the amount of about 1 to about 150 parts by weight, preferably 10 to 100 parts by weight, for each 100 parts by weight of the solids in the curable coating material. Below 1 part by weight, the effects of the silicone rubber particles are not realized, while above 150 parts by weight, miscibility with the curable coating materials is adversely affected.

The cured silicone rubber powders (II) used in the present invention can be made by various methods. For example, the above silicone rubber compounds are uniformly mixed with the above epoxy group-containing compounds (or amino group-containing compounds) to obtain silicone rubber compositions. Next, these curable compositions are poured into water and uniformly dispersed therein with a high speed mixer, such as a colloid mill, or homogenizer (homomixer). The resulting aqueous dispersions are further dispersed in water at an elevated temperature or sprayed into hot air in order to cure the silicone rubber compositions containing an epoxy group-containing compound or amino group-containing compound. Alternatively, it is possible to first cure the silicone rubber compositions containing the epoxy group-containing compound or amino group-containing compound and mechanically pulverize the cured products to obtain component (II).

As described above, the silicone rubber powders can be used in various curable coating materials. However, it is preferred to select the type of coating materials considering the affinity and reactivity with the resin component of the coating material For example, for coating materials of epoxy resin vehicles, silicone powders containing an amino group-containing compound are preferred, and for coating materials of polyurethane vehicles or amino resin vehicles, silicone powders containing amino group-containing compounds are applied to obtain coating compositions providing excellent coatings with good adhesion between the vehicle and the silicone powder.

The coating compositions of the present invention are readily prepared by adding such silicone rubber powder to the above curable coating materials, followed by uniform mixing. They can then be applied to substrates from solution or dispersion by conventional coating methods well known in the art. Generally, such methods entail drying of the applied coating and curing it at ambient or elevated temperatures, as appropriate. The coating compositions of the present invention can be used as coatings for buildings, structures, various machines, and the like.

## EXAMPLES

The present invention is explained with application examples. In the examples, all parts and percents are by weight and the viscosity was measured at 25°C.

Reference Example 1

Preparation of silicone powder containing an epoxy group-containing silicon compound:

Mixture (A) was prepared by mixing 95 parts of dimethylpolysiloxane terminated with hydroxy groups at both ends and having a viscosity of 80 cP (hydroxy group content 1.3 wt%), 5 parts of γ-glycidoxypropyltrimethoxysilane, and 20 parts of methylhydrogenpolysiloxane terminated with dimethylhydrogen-siloxy groups at both ends and having viscosity of 10 cSt (silicon-bonded hydrogen content 1.5 wt%).

Mixture (B) was prepared by mixing 95 parts of the above dimethylpolysiloxane, 5 parts of γ-glycidoxypropyltrimethoxysilane, and 1.0 part of dibutyltin dioctoate.

Mixtures (A) and (B) were stored in separate storage tanks at -10°C.

Next, 500 parts each of mixtures (A) and (B) were mixed by feeding them to a static mixer (product of Tokushu Kika Co., Japan). This mixture was then fed to a high-speed mixer together with 20 parts of surfactant (trimethylnonanol-ethylene oxide adduct, Tergitol TMN-6, product of Union Carbide Corp., Danbury, CT), and 6000 parts of water, and stirred at 1400 rpm to obtain an aqueous dispersion of a silicone composition.

This aqueous dispersion was allowed to stand at room temperature for 3 hours, then sprayed at a rate of 3 liters/hour into air at 300°C. The silicon rubber composition was completely cured in the spray to produce a silicone rubber powder.

This silicone powder was collected using a cyclone and bag filter to obtain 1900 g of a silicone rubber powder with an average particle diameter of 40 μm.

Reference Example 2

Preparation of silicone rubber powder containing an epoxy group-containing compound:
Mixture (A) having a viscosity of 20 cP was prepared by mixing 100 parts of dimethylpolysiloxane terminated by dimethylvinylsiloxy groups at both ends and having a viscosity of 2000 cP (vinyl group content 0.25 wt%) with 3 parts of methylhydrogenpolysiloxane terminated by trimethylsiloxy groups at both ends and having a viscosity of 10 cP (silicon-bonded hydrogen content 1 wt%) and 5 parts of γ-glycidoxypropyltrimethoxysilane.

Mixture (B) was prepared by mixing 100 parts of the above described dimethylpolysiloxane with 0.3 part of a chloroplatinic acid solution in isopropyl alcohol (platinum content 3 wt%).

Mixtures (A) and (B) were kept in separate tanks at -30°C, whereupon 250 parts each of mixtures (A) and (B) were uniformly mixed in a homomixer at +5°C. The resulting mixture was treated with 100 parts of Tergitol TMN-6, mixed for 1 minute, treated with 1000 parts of deionized water, and emulsified at 800 rpm for 5 minutes. The emulsion temperature was +10°C. To a flask equipped with a stirrer and containing 50 parts of the above emulsion there was added 2000 parts of water at 40°C. The resulting mixture was stirred at 10 rpm to obtain a cured silicone rubber powder which was then washed and dried. When observed under a microscope, the cured silicone rubber particles exhibited a pearl shape having an average diameter of 30 μm.

Reference Example 3

Preparation of silicone rubber powder containing an amino group-containing silicon compound:
A mixture was prepared from 90 parts of dimethylpolysiloxane terminated with hydroxy groups at both ends and having a viscosity of 80 cP (hydroxy group content 1.3 wt%), 10 parts of γ-aminopropyltrimethylsilane, 20 parts of methylhydrogenpolysiloxane terminated with dimethylhydrogensiloxy groups at both ends having a viscosity of 20 cSt (silicon-bonded hydrogen content 0.15 t%) and 0.5 part of dibutyl dioctoate. This mixture was passed through a colloid mill to obtain an aqueous dispersion of a silicone rubber composition. The resulting dispersion was then allowed to stand at room temperature for 1 hour and sprayed into air at 230°C to obtain silicon rubber particles with an average diameter of 50 μm.

Application Example 1

To a 500 cc metal container there was added 100 g of acrylic resin coating material (tradename: "Magicron" Clear, product of Kansai Paint Co., Japan), 40 g of the silicone powder containing an epoxy group-containing compound obtained in Reference Example 1 and 50 g of toluene. Ten ceramic balls having a diameter of 10 mm, were added to the container and the contents were mixed using a pot mill rotator (product of Nitto Kagaku Co., Japan) at 200 rpm for 5 hours to obtain a coating composition. This coating composition was coated on a Teflon film and air-dried at room temperature for 24 hours to produce a coating.

This coating was a mat film and had a rubbery soft touch.

Application Example 2

According to the procedure of Application Example 1, a coating composition was prepared from 100 g of a polyurethane coating material (tradename: "Retan White", product of Kansai Paint Co., Japan), 50 g of the silicone rubber powder containing an epoxy group-containing silicon compound obtained in Reference Example 1 and 50 g of toluene. This composition was then mixed well with 20 g of a hardener for the polyurethane resin coating material, coated on a Teflon sheet, and dried at room temperature for 24 hours to produce a mat coating.

This coating film was cut and the cut surface was observed under a scanning electron microscope, showing a uniform distribution of the silicone powder throughout the polyurethane resin coating material. It was also noted that the powder was strongly adhered to the polyurethane resin coating.

Application Example 3

According to the procedure of Application Example 1, 100 g of epoxy resin coating material (tradename: "Million" White, product of Kansai Paint Co., Japan) were mixed with 100 g of the silicone rubber powder containing the amino group-containing compound obtained in Reference Example 3 and 50 g of toluene.

The above mixture was mixed well with 25 g of a hardener for the above epoxy resin coating material and the resulting coating composition was coated on a Teflon sheet and allowed to stand at room temperature for 24 hours to obtain a mat coating film. This film was cut and the cut surface was observed under a scanning electron microscope, showing a uniform distribution of the silicone rubber powder in the epoxy resin coating material with good adhesion between the epoxy resin and the rubber powder. This coating film was then bent 180°, and the cut area at the bend was similarly observed under the scanning electron microscope, showing complete adhesion of the silicone rubber powder to the epoxy resin coating material.

Comparative Example 1

A silicone rubber powder was prepared by repeating Reference Example 3 without the γ-aminopropyltrimethoxysilane.

A coating composition was obtained by repeating Application Example 3 using the above silicone rubber powder in place of the silicone rubber powder containing the amino group-containing silicon compound. The characteristics of this coating composition were examined as in Application Example 3. The coating was a mat film wherein the dispersion of the silicone rubber powder in the epoxy resin coating materials was good. However, when the coating film was bent 180° and the cut area at the bend was observed, it was learned that there were gaps between the silicone rubber powder and the coating material, with the silicone rubber particles about to fall off.

**Claims**

1. A coating composition comprising:

(I) 100 parts by weight of a curable coating material; and

(II) from about 1 to about 150 parts by weight of a cured silicone rubber powder which has uniformly dispersed therein from about 1 to about 20 percent by weight of a compound selected from the group consisting of
(i) an epoxy group-containing compound and
(ii) an amino group-containing silicon compound, said silicone rubber powder having an average particle diameter of less than about 100 μm.

2. In a method for forming a mat surface coating on a substrate by curing a coating material thereon, the improvement comprising mixing with said coating material a cured silicone rubber powder which has uniformly dispersed therein from about 1 to about 20 percent by weight of a compound selected from the group consisting of
(i) an epoxy group-containing compound and
(ii) an amino group-containing silicon compound, said silicone rubber powder having an average particle diameter of less than about 100 μm.

3. A substrate coated with the composition of claim 1.